# EUROPEAN PATENT APPLICATION

(11) **EP 4 535 678 A2**
(43) Date of publication of application: **09.04.2025**
(21) Application number: 24200727.6
(22) Date of filing: 17.09.2024
(51) Int. Cl.: H04B 7/024, H04L 5/00, H04W 8/24

(54) **JOINT TRANSMISSION SCHEMES IN A UNIFIED TRANSMISSION CONFIGURATION INDICATOR FRAMEWORK**

(30) Priority: 18.09.2023 US 202363538994 P; 12.09.2024 US 202418884065
(71) Applicant: Samsung Electronics Co., Ltd., Gyeonggi-do, 16677 (KR)
(72) Inventor: SHAHMOHAMMADIAN, Hoda, San Jose, CA, 95134 (US); BAE, Jung Hyun, San Jose, CA, 95134 (US)
(74) Representative: Kuhnen & Wacker Patent- und Rechtsanwaltsbüro PartG mbB

(57) **Abstract**

A system and a method are disclosed for joint transmission in a UTCI framework, the method includes sending, by a user equipment (UE), a first transmission including information indicating a capability of per resource set for a first feature associated with a unified transmission-configuration-indicator (UTCI) scheme, the capability of per resource set indicating that the UE is capable of associating channel-state-information reference-signal (CSI-RS) resources with transmission-configuration-indicator (TCI) states at a resource-set level, wherein the UE is configured to support a joint transmission, and wherein the first feature indicates that the UE is capable of supporting per aperiodic CSI-RS resource configuration for TCI selection, or per aperiodic CSI-RS resource-set configuration for TCI selection.

## Description

### BACKGROUND

### 1. Field

Aspects of embodiments of the present disclosure relate to wireless communications. For example, aspects of embodiments of the present disclosure relate to improved systems and methods for configuring joint transmission schemes in a unified transmission configuration indictor (UTCI) framework.

### 2. Description of the Related Art

Modern communications equipment (e.g., mobile phones, vehicles, laptops, satellites, and the like), also known as user equipment (UE), may communicate with a network node (e.g., a base station, also referred to as a gNB) to receive data from a network associated with the network node and to transmit data to the network associated with the network node. The data may be sent via one or more transmission-and-reception points (TRPs) associated with the network node. A transmission of the same signal from multiple TRPs to a UE may be referred to as a joint transmission. Joint transmissions may allow for interference suppression and improved received-signal quality. A Transmission Configuration Indicator (TCI) state represents configurations such as quasi colocation relationships (QCL-relationships) between a target reference signal (RS) and a source RS. A TCI state may include a given transmission beam, if applicable, as in QCL-type D. Under the UTCI framework, a UE may be provided with only one unified TCI state per TRP. For example, the UTCI framework may specify that all channels and resources for a transmission follow one indicated unified TCI state. By simplifying (e.g., by reducing) the number of available TCI states for the transmission, the UTCI framework may allow for more efficient communications between the network node and the UE.

The above information disclosed in this Background section is for enhancement of understanding of the background of the present disclosure, and, therefore, it may contain information that does not constitute prior art.

### SUMMARY

The UTCI framework may simplify (e.g., may reduce) a number of available TCI states for transmissions and allow for efficient communications between a network node and a UE. However, as discussed in further detail below, some UEs that are capable of receiving joint transmissions, which include non-coherent joint transmission (NCJT) and coherent joint transmission (CJT) may experience performance limitations as a result of applying (e.g., complying with) the UTCI framework.

To overcome these issues, systems and methods are described herein for joint transmissions (e.g., for configuring joint transmissions) in the UTCI framework.

Some embodiments of the present disclosure are directed to sending, by some UEs, information (e.g., via capability signaling) to indicate capabilities that might otherwise go unreported in a UTCI framework.

Some embodiments of the present disclosure are directed to declining, by some UEs, certain UE features based on the capabilities of a given UE and the potential limitations of operating within the UTCI framework.

Some embodiments of the present disclosure are directed to determining, by some UEs, how to associate groups of resources with two or more TCI states.

The above approaches improve on previous methods by reducing the risks of ambiguity and under reporting (e.g., conservative reporting) related to joint transmission in the UTCI framework.

According to some embodiments of the present disclosure, a method for configuring a joint transmission in a UTCI framework includes sending, by a user equipment (UE), a first transmission including information indicating a capability of per resource set for a first feature associated with a unified transmission-configuration-indicator (UTCI) scheme, the capability of per resource set indicating that the UE is capable of associating channel-state-information reference-signal (CSI-RS) resources with transmission-configuration-indicator (TCI) states at a resource-set level, wherein the UE is configured to support a j oint transmission, and wherein the first feature indicates that the UE is capable of supporting per aperiodic CSI-RS resource configuration for TCI selection, or per aperiodic CSI-RS resource-set configuration for TCI selection.

The first feature may be associated with an index number of 40-1-3 of a Radio Access Network 1 (RAN1) UE features list.

The joint transmission may include a non-coherent joint transmission (NCJT), and the UE may support NCJT CSI under a second feature, the second feature indicating that the UE is capable of supporting one or more features of channel-state-information multiple-transmission-and-reception point (CSI MTRP).

The second feature may be associated with an index number of 23-7-1 of a Radio Access Network 1 (RAN1) UE features list.

The joint transmission may include a coherent joint transmission (CJT), and the UE may support CJT CSI under a second feature, the second feature indicating that the UE is capable of supporting two transmission-configuration-indicator (TCI) states for a CJT transmission scheme for a physical downlink shared channel (PDSCH).

The second feature may be associated with an index number of 40-1-4 of a Radio Access Network 1 (RAN1) UE features list.

The method may further include sending, by the user equipment (UE), a second transmission including information declining to perform the first feature, wherein the joint transmission includes a non-coherent joint transmission (NCJT), and the UE supports NCJT CSI under a second feature, the second feature indicating that the UE is capable of supporting one or more features of channel-state-information multiple-transmission-and-reception point (CSI MTRP).

The first feature may be associated with an index number of 40-1-3 of a Radio Access Network 1 (RAN1) UE features list, and the second feature may be associated with an index number of 23-7-1 of the RAN1 UE features list.

The UE may not support joint operation of a joint transmission and a UTCI CSI-RS transmission.

According to other embodiments of the present disclosure, a method for configuring a joint transmission in a UTCI framework includes sending, by a user equipment (UE), first capability information based on a rule indicating how the UE applies a first indicated transmission configuration indicator (TCI) state or a second indicated TCI state to an aperiodic channel-state-information reference-signal (AP CSI-RS) resource, and receiving, by the UE, a coherent joint transmission (CJT) based on the sending of the first capability information.

The first indicated TCI state may include a joint TCI state or a downlink (DL) TCI state, or the second indicated TCI state may include a joint TCI state or a DL TCI state.

The rule may indicate that support of the CJT is conditioned on the UE supporting a resource-level radio-resource-control (RRC) configuration, wherein the resource-level RRC configuration indicates that the UE is to apply a first indicated transmission configuration indicator (TCI) state or a second indicated TCI state to an aperiodic channel-state-information reference-signal (AP CSI-RS) resource.

The sending of the first capability information may include sending information indicating support of unified TCI (UTCI) with a capability of per resource set, and two or more unified TCI (UTCI) states in a CJT scheme, wherein the first indicated TCI state includes a first indicated UTCI state and the second indicated TCI state includes a second indicated UTCI state, and the rule indicates that, for CJT measurement or reporting the UE applies the first indicated UTCI state to a CSI-RS resource in a first group, and the UE applies the second indicated UTCI state to a CSI-RS resource in a second group, the CSI-RS resource in the first group corresponds to a first TRP or to a first TRP group associated with a first indicated UTCI state, and the CSI-RS resource in the second group corresponds to a second TRP or to a second TRP group associated with the second indicated UTCI state.

The sending of the first capability information may include declining to perform a first feature associated with a unified transmission-configuration-indicator (UTCI) scheme, wherein the UE supports a CJT scheme via a second feature and/or a third feature, and more than one unified transmission-configuration-indicator (UTCI) state for CJT via a fourth feature, wherein the first feature indicates that the UE is capable of supporting per aperiodic CSI-RS resource configuration for TCI selection, or per aperiodic CSI-RS resource-set configuration for TCI selection, wherein the second feature indicates that the UE is capable of supporting one or more features for a first CJT codebook, wherein the third feature indicates that the UE is capable of supporting one or more features for a second CJT codebook, and wherein the fourth feature indicates that the UE is capable of supporting two TCI states for the CJT scheme for a physical downlink shared channel (PDSCH).

The first feature may be associated with an index number of 40-1-3 of a Radio Access Network 1 (RAN1) UE features list, the second feature may be associated with an index number of 40-3-1-1 of the RAN1 UE features list, the third feature may be associated with an index number of 40-3-1-5 of the RAN1 UE features list, and the fourth feature may be associated with an index number of 40-1-4 of the RAN1 UE features list.

According to other embodiments of the present disclosure, a method for configuring a joint transmission in a UTCI framework includes sending, by a user equipment (UE), information indicating a capability of per resource for a first feature associated with a unified transmission-configuration-indicator (UTCI) scheme, the capability of per resource indicating that the UE is capable of associating channel-state-information reference-signal (CSI-RS) resources with transmission-configuration-indicator (TCI) states at a resource level, and sending, by the UE, information indicating support for a second feature, the second feature indicating that the UE is capable of supporting joint operation of joint transmission CSI, and per aperiodic UTCI CSI-RS resource configuration for TCI selection, wherein the first feature indicates that the UE is capable of supporting per aperiodic CSI-RS resource configuration for TCI selection, or per aperiodic CSI-RS resource-set configuration for TCI selection.

The first feature may be associated with an index number of 40-1-3 of a Radio Access Network 1 (RAN1) UE features list.

The joint transmission CSI may include a non-coherent joint transmission (NCJT) CSI.

The joint transmission CSI may include a coherent joint transmission (CJT) CSI.

The granularity of support for the second feature may include a per-UE granularity, the per-UE granularity may indicate that the UE is capable of performing the second feature in any scenario.

### BRIEF DESCRIPTION OF THE DRAWINGS

The above and other aspects of the present disclosure will be more clearly understood from the following detailed description of the illustrative, non-limiting embodiments with reference to the accompanying drawings.
FIG. 1 is a block diagram depicting a system for joint transmission in a UTCI framework, according to some embodiments of the present disclosure.
FIG. 2 is a block diagram depicting a grouping of resources in the system for joint transmission in the UTCI framework, according to some embodiments of the present disclosure.
FIG. 3 is a diagram depicting table entries from a Radio Access Network 1 (RAN1) UE features listing for index number 40-1-3.
FIG. 4A is a diagram depicting table entries from the RAN1 UE features listing for index number 23-7-1.
FIG. 4B is a diagram depicting definitions for parameters associated with the RAN1 UE features listing for index number 23-7-1.
FIG. 5 is a flowchart depicting a method for configuring NCJT in a UTCI framework based on the UE indicating "per resource set," according to some embodiments of the present disclosure.
FIG. 6 is a flowchart depicting a method for configuring NCJT in a UTCI framework based on the UE indicating a separate capability, according to some embodiments of the present disclosure.
FIG. 7 is a diagram depicting possible table entries for the separate capability discussed with respect to FIG. 6 (with an index number of, for example, 40-1-A) and depicted in a format associated with the RAN1 UE features listing, according to some embodiments of the present disclosure.
FIG. 8 is a diagram depicting table entries from the RAN1 UE features listing for index number 40-1-4.
FIG. 9 is a flowchart depicting a method for configuring CJT in a UTCI framework based on the UE associating indicated UTCI states with respective related TRPs, according to some embodiments of the present disclosure.
FIG. 10A is a diagram depicting possible table entries for a potential separate capability (e.g., having an index number of 40-1-B) depicted in a format associated with the RAN1 UE features listing, according to some embodiments of the present disclosure.
FIG. 10B is a flowchart depicting a method for configuring CJT in a UTCI framework based on the UE indicating a separate capability for j oint operation of CJT and UTCI, according to some embodiments of the present disclosure.
FIG. 11 is a flowchart depicting a method for configuring CJT in a UTCI framework based on the UE declining to perform a given feature, according to some embodiments of the present disclosure.
FIG. 12A is a diagram depicting table entries from the RAN1 UE features listing for index number 40-3-1-1.
FIG. 12B is a diagram depicting additional table entries from the RAN1 UE features listing for index number 40-3-1-1.
FIG. 13A is a diagram depicting table entries from the RAN1 UE features listing for index number 40-3-1-5.
FIG. 13B is a diagram depicting additional table entries from the RAN1 UE features listing for index number 40-3-1-5.
FIG. 13C is a diagram depicting table entries from the RAN1 UE features listing for index number 2-35, which is listed as a prerequisite feature group in table entries from the RAN1 UE features listings for index numbers 40-3-1-1 and 40-3-1-5.
FIG. 13D is a diagram depicting additional table entries from the RAN1 UE features listing for index number 2-35.
FIG. 14 is a flowchart depicting a method for configuring CJT in a UTCI framework based on the UE indicating "per resource set," according to some embodiments of the present disclosure.
FIG. 15 is a diagram depicting possible table entries for a potential separate capability (e.g., having an index number of 40-1-C) depicted in a format associated with the RAN1 UE features listing, according to some embodiments of the present disclosure.
FIG. 16 is a flowchart depicting a method for configuring CJT in a UTCI framework based on the UE indicating a separate capability for joint operation of CJT with more than one UTCI state and UTCI, according to some embodiments of the present disclosure.
FIG. 17 is a block diagram of an electronic device in a network environment, according to some embodiments of the present disclosure.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the terms "or" and "and/or" include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The electronic or electric devices and/or any other relevant devices or components according to embodiments of the present disclosure described herein may be implemented utilizing any suitable hardware, firmware (e.g., an application-specific integrated circuit (ASIC)), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices.

As discussed above, modern communications equipment (e.g., mobile phones, vehicles, laptops, satellites, and the like), also known as user equipment (UE), may communicate with a network node (e.g., a base station) to receive data from a network associated with the network node and to transmit data to the network associated with the network node. The data may be sent via one or more transmission-and-reception points (TRPs) associated with the network node. A transmission of the same signal from multiple TRPs to a UE may be referred to as a joint transmission. Joint transmissions may allow for interference suppression and improved received-signal quality. Under the UTCI framework, a UE may be provided with only one TCI state. For example, the UTCI framework may specify that all channels and resources for a transmission follow one indicated TCI state. By simplifying (e.g., by reducing) the number of available TCI states for the transmission, the UTCI framework may allow for more efficient communications between the network node and the UE.

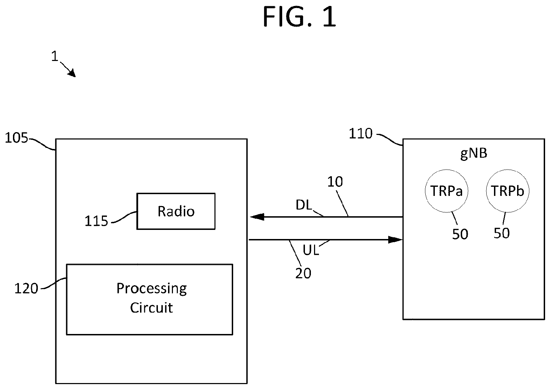

FIG. 1 is a block diagram depicting a system for joint transmission (e.g., for configuring a joint transmission) in a UTCI framework, according to some embodiments of the present disclosure.

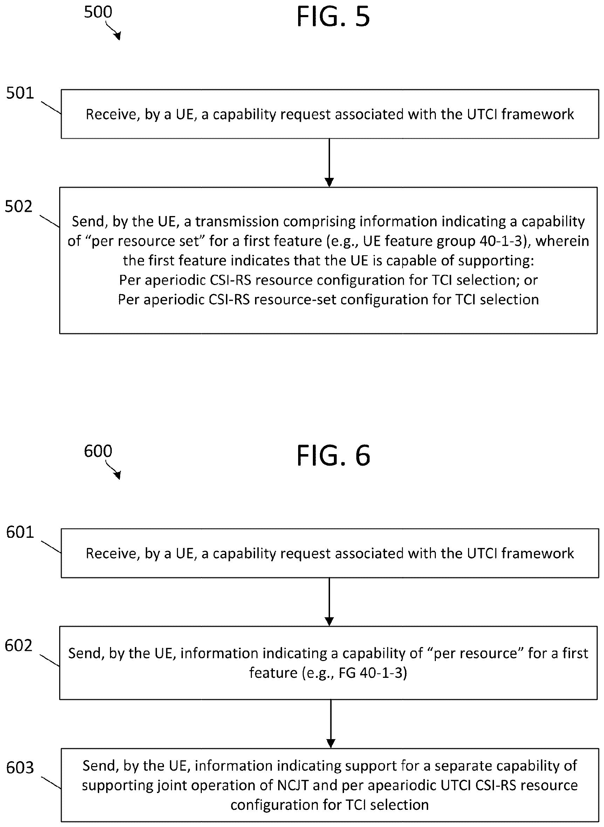

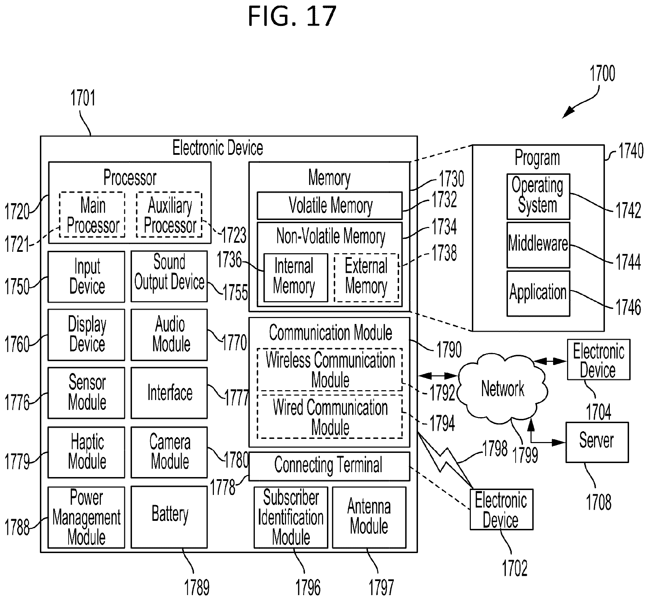

Referring to FIG. 1, the system 1 may include a UE 105 and a network node 110 (e.g., a gNodeB, also referred to as a "base station"), in communication with each other. The UE 105 may include a radio 115 and a means for processing. The means for processing may include a processing circuit 120, which may perform various methods disclosed herein (e.g., the methods illustrated in FIGS. 5, 6, 9, 10B, 11, 14 and 16). The radio 115 may correspond to the communication module 1790 (see FIG. 17). The processing circuit 120 may correspond to the processor 1720 (see FIG. 17). The processing circuit 120 may receive, via the radio 115, transmissions from the network node 110, and the processing circuit 120 may transmit, via the radio 115, signals to the network node 110. A transmission from the network node 110 may be provided to the UE 105 via a downlink (DL) transmission 10. A transmission from the UE 105 may be provided to the network node 110 via an uplink (UL) transmission 20. Aspects of some embodiments of the present disclosure are associated with configuring channel-state-information reference-signal (CSI-RS) resources for use by the UE 105 as channel measurement resources (CMRs) for single downlink-control-information (S-DCI) based multi-TRP (MTRP, also written as mTRP) transmission in relation to a UTCI framework (e.g., a UTCI scheme). In some embodiments, the network node 110 may include one or more transmission-and-reception points (TRPs) 50 in communication with the UE 105. Although the present disclosure discusses two TRPs located at the same network node, it should be understood that the present disclosure is not limited thereto. For example, the system 1 could include any number of TRPs located at any number of network nodes 110 in communication with one or more UEs 105.

In some embodiments, as part of a configuration process, the UE 105 may perform capability signaling. For example, the UE 105 may receive a capability request from the network node 110. The UE 105 may respond to the capability request by sending information to the network node 110. The information may include capability information, indicating the UEs capabilities for performing one or more features. For example, the UE 105 may send the capability information to the network node 110 via an UL transmission 20. Based on the capability information, the network node 110 may configure resources for the UE 105. The network node 110 may send the resources to the UE 105 via an DL transmission 10.

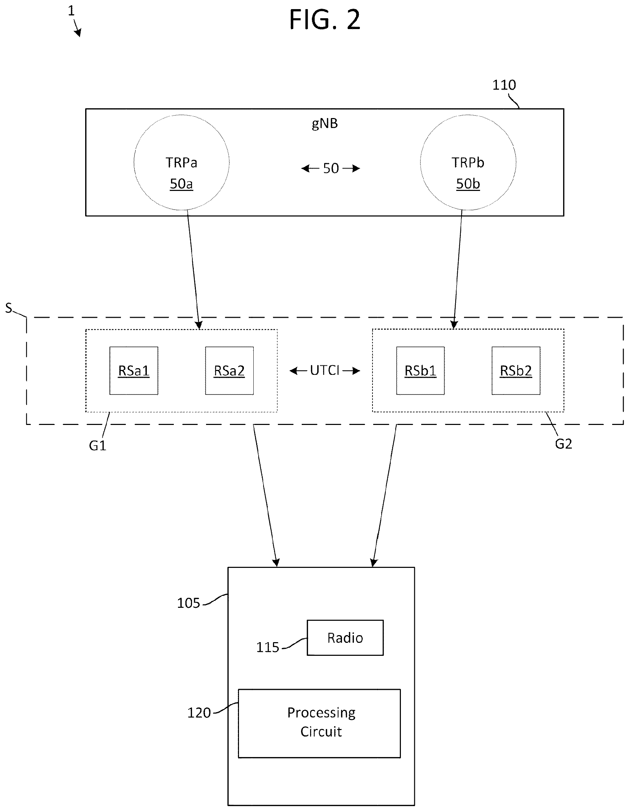

FIG. 2 is a block diagram depicting a grouping of resources in the system for joint transmission in the UTCI framework, according to some embodiments of the present disclosure.

Referring to FIG. 2, the system 1 may provide for joint transmissions from the network node 110 to the UE 105. In the Third Generation Partnership Project (3GPP) framework, a joint transmission (JT) scheme refers to a simultaneous data transmission, by the network node 110 in cooperation with a set of multiple TRPs 50 (also referred to as cooperating TRPs), to the same UE. As discussed above, joint transmission may allow for interference suppression and improvements to the quality of a received signal associated with the simultaneous data transmission. Joint transmission may be categorized into CJT and NCJT. In CJT, each participating TRP may send signals in a manner that may be considered as synchronized across all participating TRPs. In NCJT, each participating TRP may send signals in a manner that may be considered as out of synchronization with each other. CJT assumes that the network node 110 has detailed channel state information (CSI) for serving links from all cooperating TRPs associated with transmitting a signal to the UE 105. In CJT, the transmitted signals from different TRPs may be jointly precoded (e.g., by the network node 110) with prior information of phase synchronization across the TRPs. The joint precoding may allow the system 1 to achieve coherent combining at the served UE (e.g., at the UE 105). Contrastingly, the system 1 assumes a non-ideal backhaul condition for NCJT, wherein full synchronization of all cooperating TRPs may not be feasible (e.g., may not be provided). In NCJT, the transmitted signals from different TRPs are non-coherently precoded across TRPs (e.g., by the TRPs). Precoding refers to a type of signal processing technique applied across the cooperating TRPs within the system to improve the quality and reliability of data transmission and enables successful decoding of information associated with a joint transmission.

In Release 17 of the 3GPP, dynamic channel hypothesis and interference hypotheses CSI measurement and reporting were discussed and introduced for NCJT transmissions. In the Release 17 CSI enhancement for NCJT MTRP transmission, the UE 105 may be configured with one CSI-RS resource set S including *Kₛ* ≥ 2 (e.g., at least two) non-zero-power (NZP) CSI-RS resources as CMRs for measurement hypotheses associated with a single TRP. The UE 105 may be configured with *N* ≥ 1 (e.g., at least one) NZP CSI-RS resource pairs. *Kₛ* refers to a number of CSI-RS resources, and each resource pair may be used as one CMR for a NCJT measurement hypothesis. All CMRs in a CSI-RS resource set may have (e.g., may correspond to) the same number of ports. Association of different TRPs (e.g., association of different TCI states) with the CMRs may be done at a resource level. For example, to associate different TRPs 50 with the CMRs at the resource level, the UE 105 may be configured with two CMR groups, a first CMR group G1 and a second CMR group G2, respectively corresponding to a first TRP 50a and a second TRP 50b, wherein *Kₛ = K*₁ + *K*₂, *K*₁ and *K*₂ respectively being a number of CMRs in the first CMR group G1 and a number of CMRs in the second CMR group G2. For example, the first CMR group G1 may include a first resource RSa1 and a second resource RSa2 associated with the first TRP 50a. The second CMR group G2 may include a first resource RSb1 and a second resource RSb2 associated with the second TRP 50b. CMR pairs for NCJT measurement hypothesis may be determined by selecting one resource per CMR group. This agreement (hereinafter, the "NCJT Grouping Agreement") from Release 17 provides for NCJT grouping. NCJT grouping allows the UE 105 to associate resources with specific TRPs for S-DCI based MTRP.

The NCJT Grouping Agreement indicates the following. For a CSI measurement associated with a reporting setting (e.g., CSI-ReportConfig) for NCJT, the UE may be configured with Ks ≥ 2 NZP CSI-RS resources in a CSI-RS resource set for CMR and N ≥ 1 NZP CSI-RS resource pairs, wherein each resource pair may be used for a NCJT measurement hypothesis as follows. The UE may be configured with two CMR groups with *Kₛ = K*₁ + *K*₂ CMRs. CMR pairs may be determined from two CMR groups by one or more of the following methods. *K*₁ and *K*₂ may be (e.g., may represent) the number of CMRs in two CMR groups, respectively. *K*₁ may be equal to *K₂.* In some embodiments, *K*₁ may be different from *K*₂*.* CMRs in each CMR group may be used for both NCJT and Single-TRP measurement hypotheses. *N* CMR pairs may be configured, by a higher layer, by selecting from among all possible resource pairs. *N*=1 and *Kₛ* =2 may be supported. For CPU occupation, resource occupation, and/or port occupation, an NCJT hypothesis may be considered separately from a single TRP hypothesis.

Due to employment of cloud (also referred to as "centralized") radio-access-network (C-RAN) architectures in real networks and faced with rapidly increasing demand for CJT MTRP transmission, additional enhancements of CSI measurement and reporting frameworks were discussed and introduced in Release 18 of the 3GPP for CJT MTRP transmissions. Following the same approach as in Release 17 CSI enhancement for NCJT, Release 18 indicates that a UE may be configured with one CSI-RS resource set including K >1 NZP (e.g., more than one) CSI-RS resources as CMRs, wherein each resource of the CMRs may correspond to one TRP or one TRP-group. All CMRs in the set may have the same number of ports, and association of different TRPs (e.g., different TCI states) with the CMRs may be done at a resource level. This agreement (hereinafter, the "CJT Grouping Agreement") from Release 18 provides for CJT grouping. CJT grouping allows the UE 105 to associated resources with specific TRPs for S-DCI based MTRP.

The CJT Grouping Agreement indicates the following. For the Release 18 Type-II codebook refinement for CJT multiple TRP (mTRP) with NTRP>1 TRP/TRP-groups, the following may be supported. The CMR may comprise K>1 NZP CSI-RS resources, wherein one resource corresponds to one TRP or one TRP-group (e.g., K=NTRP). Each of the CSI-RS resources may have a same number of CSI-RS ports.

UE capability signaling refers to a mechanism with which the UE 105 may inform the network node 110 of the capability of the UE 105 to perform certain features. For example, a UE may signal its ability to perform certain features via a given UE capability-signaling mechanism. As discussed above, the UE 105 may send capability information to perform capability signaling as part of a configuration process. For example, the network node 110 may configure CMRs for use by the UE 105 based on the capability information provided by the UE 105. The network node 110 may send capability requests to the UE 105 via a DL transmission 10 (e.g., see FIG. 1). The UE 105 may send capability information to the network node 110 via an UL transmission 20 (e.g., see FIG. 1). The CMRs may be provided by the network node 110 via a DL transmission 10.

The UE 105 may report its capabilities, in accordance with the 3GPP, using one or more of the following mechanisms. The UE 105 may report its capability to perform certain features in any scenario. For example, the UE may report its capability on a per-UE basis, which indicates that the UE 105 may perform the reported capability in any scenario (e.g., in any given frequency band, etc.). The UE 105 may report its capability to perform certain features in particular bands. For example, the UE may report its capability on a per-band basis, which indicates that the UE 105 may perform the reported capability in particular frequency bands. The UE may report its capability to perform certain features in particular band combinations for carrier aggregation (CA). For example, the UE may report its capability on a per-bandcombination (or per-BC) basis, which indicates that the UE 105 may perform the reported capability in particular frequency-band combinations. The UE may report its capability to perform certain features in one or more specific bands in a particular band combination for CA. For example, a mechanism referred to as feature sets may be used to allow for such flexibility in reporting, and the UE may report its capability on a per-featureSet (or per-FS) basis, which indicates that the UE 105 may perform the reported capability in one or more specific bands in a particular band combination. The UE may report its capability to perform certain features in one or more specific component carriers (CC) in a particular band combination for CA. For example, a mechanism referred to as feature sets per cc may be used to allow for such flexibility in reporting, and the UE may report its capability on a per-featureSet per cc (or per-FSPC) basis, which indicates that the UE 105 may perform the reported capability in one or more specific CC in a particular band combination. A band combination refers to a collection of bands to represent CA configuration (e.g., as described in the 3GPP specification 38.101).

The flexibility of a UE for declaring support of certain features (e.g., for sending capability information) may increase from a per-UE basis to a per-band basis to a per-bandcombination (or per-BC) basis to a per-featureSet (or per-FS) basis to a per-featureSet per cc (or per-FSPC) basis. For example, if feature A and feature Bare per-FSPC, a UE may have full flexibility of supporting only one of feature A and B in each CC. However, if those features are per-UE, then a UE could only support or only not support a given feature. A trade-off to added flexibility is greater overhead in signaling. Accordingly, a complexity of a given feature in UE implementation and an associated signaling overhead may be considered in determining how UE support of certain features may be declared (e.g., may be signaled).

### NCJT Proposals

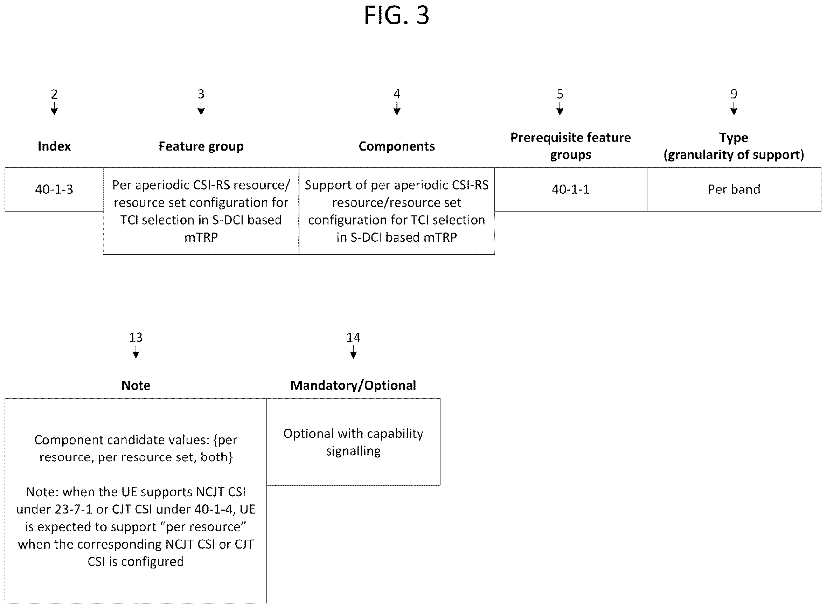

FIG. 3 is a diagram depicting table entries from a Radio Access Network 1 (RAN1) UE features listing for index number 40-1-3. RAN1 is a group, within the 3GPP, associated with determining standards for signaling and the physical layer.

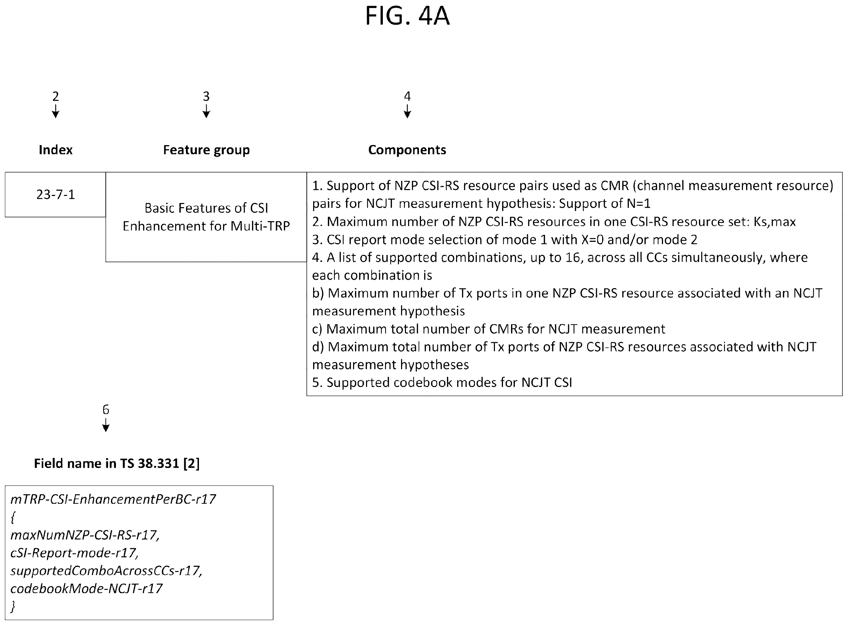

FIG. 4A is a diagram depicting table entries from the RAN1 UE features listing for index number 23-7-1.

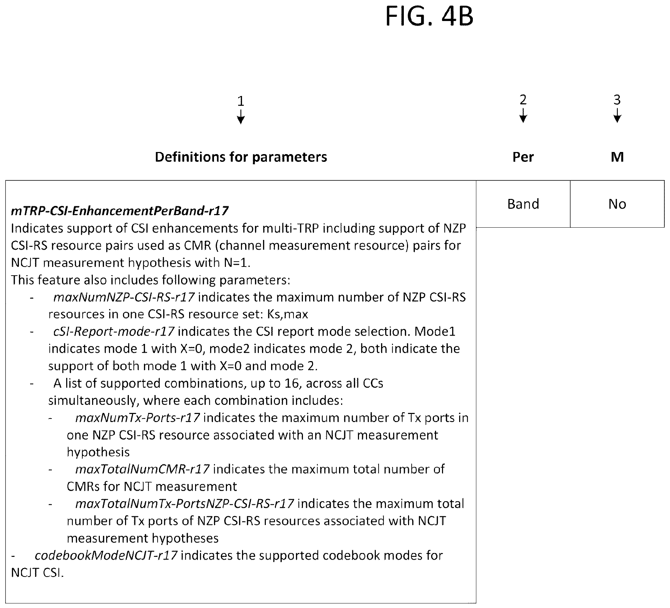

FIG. 4B is a diagram depicting definitions for parameters associated with the RAN1 UE features listing for index number 23-7-1.

It should be understood that select table entries from the RAN1 UE features listings are provided herein for convenience. One of skill in the art would understand the contents of the tables and how to find the information contained therein.

Referring to FIG. 3, with the extension of the UTCI framework for S-DCI based mTRP, RAN1 agreed to introduce a radio-resource-control (RRC) configuration in *CSI-AssociatedReportConfigInfo* of *CSI-AperiodicTrigger State* for each CSI-RS resource set or for each CSI-RS resource in each aperiodic CSI-RS resource set to inform UEs to apply the first indicated joint (or DL) TCI state or the second indicated joint (or DL) TCI state to the CSI-RS resource if the aperiodic CSI-RS resource set for CSI/beam management (BM) is configured to follow a UTCI state. Accordingly, RAN1 agreed to a UE feature, associated with index number 40-1-3, as depicted in FIG. 3, indicating component candidate values of "per resource" and "per resource set" (e.g., see column 13 of FIG. 3).

Because configuration of "per CSI-RS resource set" or "per CSI-RS resource" depends on the capabilities of a given UE, there may be an ambiguity (e.g., uncertainty) regarding UE behavior when a UE is configured to apply the UTCI framework with a capability of per resource set (instead of per resource) for a configured aperiodic CSI-RS resource set with two or more resource groups for NCJT CSI measurement and/or NCJT CSI reporting. For example, because the UE 105 (see FIG. 2) is configured with more than one group of resources (e.g., the first CMR group G1 and the second CMR group G2) in the CSI-RS resource set S, a UE 105 that is configured for a capability of per resource set would be faced with ambiguity (e.g., uncertainty) regarding how to associate the one indicated TCI state (e.g. the one UTCI) with more than one configured CMR groups in one set. Contrastingly, if the UE 105 is configured for the capability of per resource, the UE 105 can associate the first CMR group G1 with a first indicated TCI state and the second CMR group G2 with a second indicated TCI state.

To address this ambiguity, a RAN1 #114 meeting agreement indicated the following solution. On UTCI framework extension, if a UE supports NCJT CSI, the UE may support resource-level RRC configuration for informing that the UE shall apply the first indicated joint (or DL) TCI state or the second indicated joint (or DL) TCI state to an aperiodic (AP) CSI-RS resource.

However, this RAN1 #114 agreement, implicitly bundles the support of the NCJT scheme with per-CSI-RS-resource configuration for TCI selection in S-DCI based MTRP as in the UE feature group (FG) 40-1-3. Accordingly, alternative methods may be implemented to avoid limiting a given UE to the implicit bundle of support of NCJT with per resource configuration in the UTCI framework.

In some embodiments, the UE 105 supporting a NCJT scheme via FG 23-7-1 (see FIGS. 4A and 4B) (or a similar feature group) may decline the UE feature FG 40-1-3 (or a similar feature group).

For example, in some embodiments, the UE may comply with a rule that support of NCJT is conditioned on the UE supporting the resource-level radio-resource-control (RRC) configuration. For example, the UE may know the rule (that support of NCJT is conditioned on the UE supporting the resource-level RRC configuration) by default (e.g., the rule may be programmed into the UE). The resource-level RRC configuration may indicate that the UE is to apply a first indicated transmission configuration indicator (TCI) state or a second indicated TCI state to an aperiodic channel-state-information reference-signal (AP CSI-RS) resource. The UE may send capability information based on the rule that the support of CJT is conditioned on the UE supporting the resource-level RRC configuration. The capability information may include declining to perform FG 40-1-3 in the UTCI framework.

Such embodiments, however, may result in under reporting from the UE 105 because the UE 105 could have indicated "per resource set" for FG 40-1-3 supporting UTCI framework for CSI-RS transmissions in any other scheme than NCJT.

To illustrate, if the granularity of both of these UE features, FG 40-1-3 and FG 23-7-1, were per FS (indicating that the UE may perform the reported capability in one or more specific CC in a particular band combination), it would be feasible for the UE to manage reporting, such that simultaneous support of both NCJT scheme and "per resource set" for TCI selection in one CC and/or in one band would be enabled. However, due to the fact that the granularity of FG 23-7-1 and FG 40-1-3 are both per band (see column 9 of FIG. 3 and column 2 of FIG. 4B), the UE may have no option other than to under report the capabilities of the UE for some bands. In such cases, the network node 110 may only use a legacy TCI-state framework for CSI-RS transmissions.

To address the issue of under reporting, three approaches are discussed as follows.

FIG. 5 is a flowchart depicting a method for configuring NCJT in a UTCI framework based on the UE indicating "per resource set," according to some embodiments of the present disclosure.

In some embodiments, a UE that supports NCJT, but does not support joint operation of NCJT and UTCI CSI-RS transmission, may indicate "per resource set" for FG 40-1-3. In such embodiments, a network may not jointly configure NCJT and the UTCI framework for that UE.

For example, and referring to FIG. 5, in some embodiments, the UE that supports FG 23-7-1 (or a similar feature) and that does not support joint operation of NCJT and UTCI CSI-RS transmission (e.g., a UE that supports only one selected from among NCJT and UTCI CSI-RS transmission for a given transmission at a given time) may perform a method 500 for configuring a joint transmission (e.g., NCJT) in a UTCI framework. The method 500 may include one or more of the following operations. The UE may receive, from a network node, a capability request associated with the UTCI framework (operation 501). The UE may send a transmission including information (e.g., capability information) indicating a capability of "per resource set" for FG 40-1-3 (or a similar feature) (operation 502). The capability of "per resource set" may indicate that the UE is capable of associating CSI-RS resources with TCI states at a resource-set level. FG 40-1-3 indicates that the UE is configured to support per aperiodic CSI-RS resource configuration and/or per aperiodic CSI-RS resource set configuration for TCI selection in S-DCI based MTRP (see, e.g., column 4 of FIG. 3).

In some embodiments, the network may jointly configure NCJT and the UTCI framework while CSI-RS transmission configuration is based on a legacy TCI state framework. However, such embodiments may violate the RAN1 agreement that the UE is to support "per CSI-RS resource" configuration to support a NCJT scheme.

FIG. 6 is a flowchart depicting a method for configuring NCJT in a UTCI framework based on the UE indicating a separate capability, according to some embodiments of the present disclosure.

Another alternative would be to introduce a separate capability for joint operation of a NCJT CSI scheme and UTCI CSI-RS for S-DCI based MTRP for UEs that indicate "per resource" for FG 40-1-3. For such embodiments, a separate capability may be introduced for joint operation of NCJT schemes and UTCI CSI-RS transmissions. The signaling granularity of the separate UE capability may be as low as per UE.

For example, and referring to FIG. 6, in some embodiments, the UE may receive, from a network node, a capability request associated with the UTCI framework (operation 601). The UE may send information (e.g., capability information) indicating a capability of per resource for FG 40-1-3 (or a similar feature) under the UTCI scheme (operation 602). The capability of "per resource" may indicate that the UE is capable of associating CSI-RS resources with TCI states at a resource level. The UE may also send information (e.g., capability information) indicating support for a separate capability of supporting joint operation of NCJT (e.g., NCJT CSI) and per aperiodic UTCI CSI-RS resource configuration for TCI selection (operation 603). A granularity of support for the separate capability may be as low as per-UE granularity, indicating that the UE is capable of performing the separate capability in any scenario.

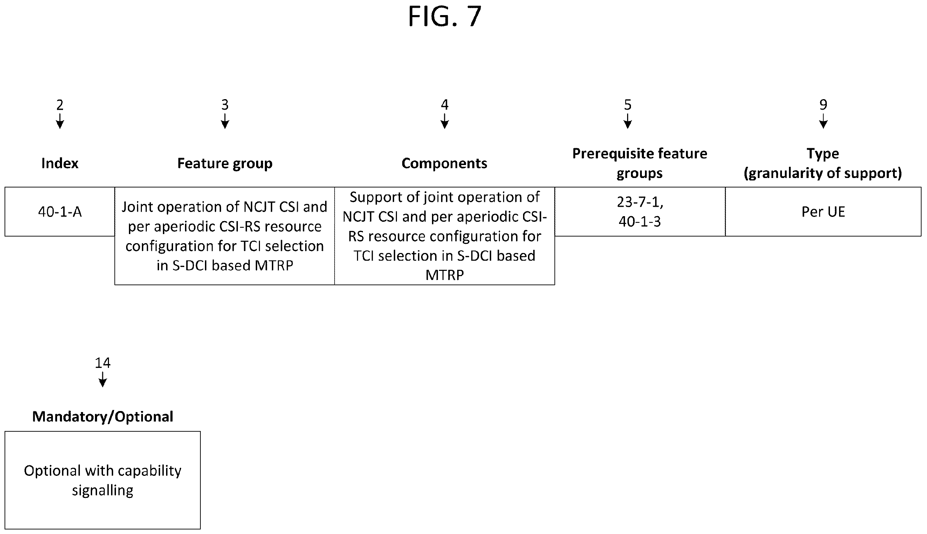

FIG. 7 is a diagram depicting possible table entries for the separate capability discussed with respect to FIG. 6 (with an index number of, for example, 40-1-A) and depicted in a format associated with the RAN1 UE features listing, according to some embodiments of the present disclosure. For example, the letter "A" may be replaced with an unused index number ending.

Referring to FIG. 7, column 2, which is associated with the RAN1 format, may indicate an index number (e.g., 40-1-A). Column 3 may indicate: joint operation of NCJT CSI and per aperiodic CSI-RS resource configuration for TCI selection in S-DCI based MTRP. Column 4 may indicate: Support of joint operation of NCJT CSI and per aperiodic CSI-RS resource configuration for TCI selection in S-DCI based MTRP. Column 5 may indicate prerequisite feature groups, including 23-7-1 and 40-1-3. Column 9 may indicate a type (e.g., a granularity of support) of per UE. Column 14 may indicate that feature (e.g., 40-1-A) is optional with capability signaling (also referred to as "capability signalling").

It should be understood that the columns numbers and headings are based on the corresponding columns and headings in the relevant RAN1 UE features listings. For example, although columns 1, 6-8, and 10-13 of a potential RAN1 UE features listing are not shown. One of skill in the art would appreciate what the provided columns and omitted columns indicate in the relevant RAN1 UE features listings throughout the present disclosure.

### CJT Proposals

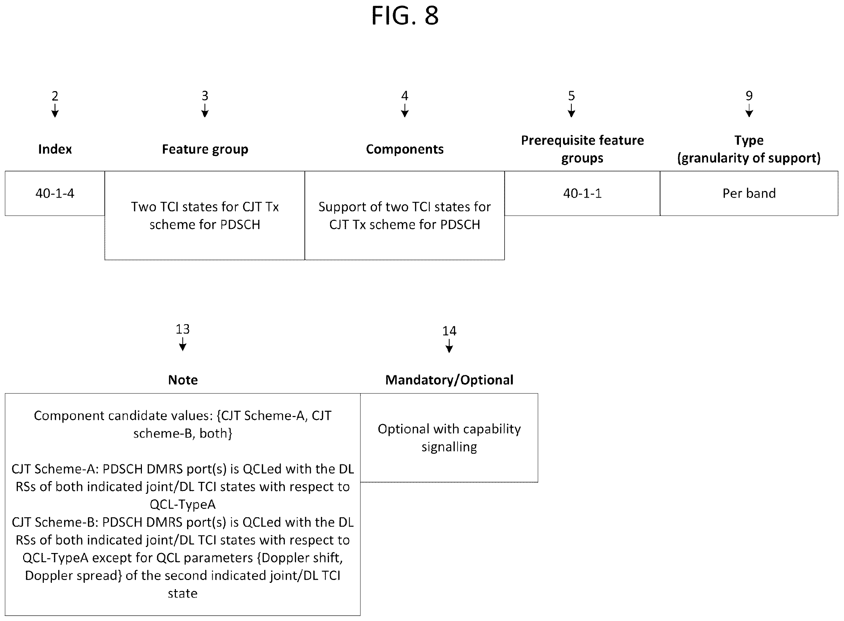

FIG. 8 is a diagram depicting table entries from the RAN1 UE features listing for index number 40-1-4.

Referring to FIG. 8, with extension of the UTCI framework for CJT based MTRP, RAN1 reached the following agreement (at RAN1 #110be), which is reflected in FG 40-1-4, to support up to two UTCI states for CJT schemes based on UE capabilities in a bandwidth part (BWP)/CC.

The RAN1 #110be agreement indicates that, on UTCI framework extension, up to two joint TCI states may be indicated by medium access control-control element (MAC-CE)/DCI and applied to CJT-based physical-downlink-shared-channel reception (PDSCH-CJT) in a BWP/CC configured with joint DL TCI mode or joint UL TCI mode. Whether one or two indicated joint TCI states for PDSCH-CJT are supported may depend on the capabilities of the UE. Quasi co-location (QCL) types and/or assumptions of the indicated joint TCI states may be applied to PDSCH-CJT. The UE may determine which indicated joint TCI states to target channels and/or signals in the BWP/CC based on 3GPP agenda item (AI) 9.1.1.1. Accordingly, UE feature 40-1-4 was agreed to as shown in FIG. 8. For example, column 4 of FIG. 8 indicates that the FG 40-1-4 indicates that the UE is capable of performing the feature of support of two TCI states for CJT transmission (Tx) scheme for physical downlink shared channel (PDSCH).

In the UTCI framework for MTRP transmission, for aperiodic CSI-RS resource sets for CSIBM that is configured to follow a UTCI state, RAN1 reached the following agreement (at RAN1 #112be), wherein an RRC configuration is introduced for each CSI-RS resource set or for each CSI-RS resource in each set to inform (e.g., to declare that) the UE is to apply the first indicated joint (or DL) TCI state or to apply the second indicated joint (or DL) TCI state.

The RAN1 #112be agreement indicates that, on UTCI framework extension for S-DCI based MTRP, an RRC configuration may be provided in CSI*-AssociatedReportConfigInfo* of *CSI-AperiodicTrigger State* for each CSI-RS resource set or for each CSI-RS resource in each aperiodic CSI-RS resource set to inform the UE to apply the first indicated joint (or DL) TCI state or the second indicated joint (or DL) TCI state to the CSI-RS resource if the aperiodic CSI-RS resource set for CSI/BM is configured to follow a UTCI state. If the offset between the last symbol of a PDCCH carrying the triggering DCI and the first symbol of the aperiodic CSI-RS resources in the aperiodic CSI-RS resource set is equal to or larger than a threshold (if the threshold is suitable), an RRC configuration may be provided in *CSI-AssociatedReportConfigInfo* of *CSI-AperiodicTrigger State* for each CSI-RS resource set or for each CSI-RS resource in each aperiodic CSI-RS resource set. If the UE is configured for a CSI-RS resource set, for an aperiodic CSI-RS resource set configured with two resource groups for NCJT CSI and configured to follow a UTCI state, if the RRC configuration is not provided to the aperiodic CSI-RS resource set, the UE may apply the first indicated joint (or DL) TCI state to the CSI-RS resources in Group 1 and may apply the second indicated joint (or DL) TCI state to the CSI-RS resources in Group 2. The UE may determine whether to use "per CSI-RS resource set" or "per CSI-RS resource," depending on the UE's capabilities. The configuration of "per CSI-RS resource set" or "per CSI-RS resource" may depend on the UE's capabilities via FG 40-1-3 (see FIG. 3).

As discussed above, RANI reached an agreement on support of up to two UTCI states for a CJT scheme with UE capability. If a UE only supports one UTCI state for a CJT scheme via FG 40-1-4, then there is no ambiguity regarding UE behavior when an aperiodic CSI-RS resource set for CJT CSI measurement and/or reporting is configured to follow a UTCI state with a capability of "per resource set" in FG 40-1-3. However, when a UE indicates support of more than one UTCI state for a CJT scheme via FG 40-1-4 and the UE is configured to follow a UTCI state with a capability of "per resource set" in FG 40-1-3 for a configured aperiodic CSI-RS resource set for CJT CSI measurement/reporting, there may be ambiguity (e.g., uncertainty) regarding the UE behavior, in a manner that is similar to the ambiguity discussed above with respect to NCJT.

To address the UE behavior ambiguity, in some embodiments, a UE behavior rule may be defined, such that when a UE is configured to follow a UTCI state with a capability of "per resource set" and with a capability of two UTCI states in a CJT scheme, the UE may apply the first indicated joint (or DL) TCI state to the CSI-RS resources in Group 1 and may apply the second indicated joint (or DL) TCI state to the CSI-RS resources in Group 2 for CJT CSI measurement and/or reporting, wherein the resources in Group 1 correspond to a first TRP (or first TRP groups) associated with the first UTCI state, while the resources in Group 2 correspond to a second TRP (or second TRP groups) associated with the second UTCI state.

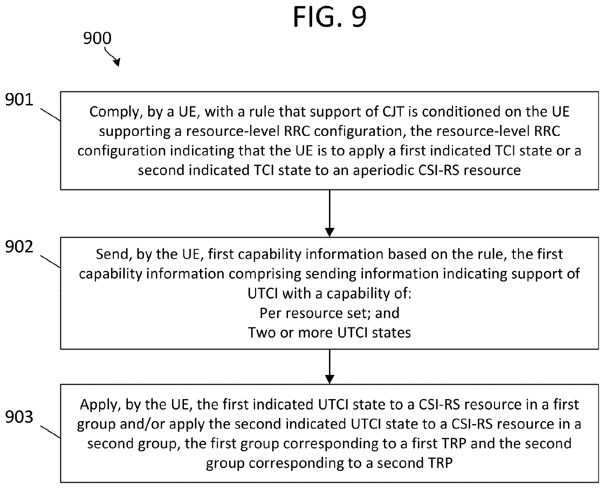

FIG. 9 is a flowchart depicting a method for configuring CJT in a UTCI framework based on the UE associating indicated UTCI states with respective related TRPs, according to some embodiments of the present disclosure.

Referring to FIG. 9, in some embodiments, and as discussed above, a UE that is configured to follow a UTCI state with a capability of "per resource set" and with a capability of two UTCI states in a CJT scheme may perform a method 900 for configuring CJT in a UTCI framework. The method may include one or more of the following operations.

The UE may comply with a rule that support of CJT is conditioned on the UE supporting a resource-level RRC configuration, the resource-level RRC configuration indicating that the UE is to apply a first indicated TCI state (e.g., a first indicated UTCI state) or a second indicated TCI state (e.g., a second indicated UTCI state) to an aperiodic CSI-RS resource (operation 901). For example, the UE may know the rule by default (e.g., the rule may be programmed into the UE). The UE may send first capability information based on the rule that the support of CJT is conditioned on the UE supporting the resource-level RRC configuration (operation 902). The first capability information may include information indicating support of UTCI with a capability of per resource set and two or more UTCI states. For CJT measurement or reporting, the UE may apply the first indicated UTCI state to a CSI-RS resource in a first group and/or may apply the second indicated UTCI state to a CSI-RS resource in a second group (operation 903). The CSI-RS resource in the first group may correspond to (may be transmitted from) a first TRP (or to a first TRP group) associated with the first indicated UTCI state. The CSI-RS resource in the second group may correspond to (e.g., may be transmitted from) a second TRP (or to a second TRP group) associated with the second indicated UTCI state.

To generalize the rule, in some embodiments, when a UE is configured to follow a UTCI state with a capability of "per resource set" in FG 40-1-3 and with capability of k>1 UTCI states in a CJT scheme in FG 40-1-4, the UE may apply the k-th indicated joint (or DL) TCI state to the CSI-RS resources in Group k, wherein the resources in each group correspond to TRP/TRP groups that share the same QCL assumptions.

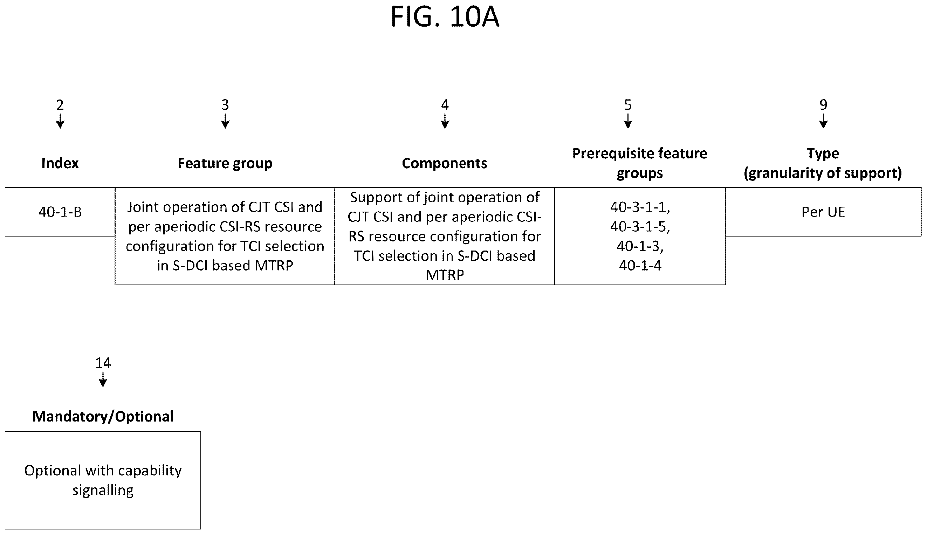

FIG. 10A is a diagram depicting possible table entries for a potential separate capability (e.g., having an index number of 40-1-B) depicted in a format associated with the RAN1 UE features listing, according to some embodiments of the present disclosure.

In some embodiments, the UE behavior rule may be implemented with a separate capability for joint operation of CJT schemes and UTCI CSI-RS when a UE indicates "per resource" for 40-1-3. The separate capability may be introduced for joint operation of CJT scheme and UTCI CSI-RS transmission as depicted in FIG. 10A (e.g., as FG 40-1-B). For example, column 4 of FIG. 10A indicates: Support of joint operation of CJT CSI and per aperiodic CSI-RS resource configuration for TCI selection in S-DCI based MTRP.

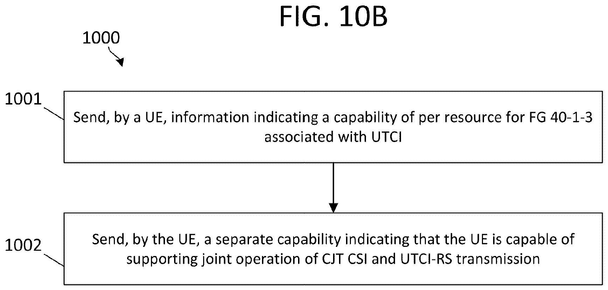

FIG. 10B is a flowchart depicting a method for configuring CJT in a UTCI framework based on the UE indicating a separate capability for joint operation of CJT and UTCI, according to some embodiments of the present disclosure.

Referring to FIG. 10B, in some embodiments, and as discussed above, a UE may perform a method 1000 for configuring CJT in a UTCI framework. The method may include one or more of the following operations.

The UE may send information indicating a capability of per resource for FG 40-1-3 (or a similar feature) associated with UTCI (operation 1001). The UE may send a separate capability indicating that the UE is capable of supporting joint operation of CJT CSI and UTCI transmission (operation 1002). For example, the UE may send a separate capability indicating that the UE is capable of supporting joint operation of CJT CSI and per aperiodic UTCI CSI-RS resource configuration for TCI selection in S-DCI based MTRP.

In some embodiments, support of CJT CSI may be conditioned on the support of a resource-level RRC configuration for signaling that the UE may apply the first indicated joint (or DL) TCI or the second indicated joint (or DL) TCI state to an aperiodic CSI-RS resource. In such embodiments, however, the support of a CJT scheme may be implicitly bundled with more than one UTCI state and per-CSI-RS resource configuration for TCI selection.

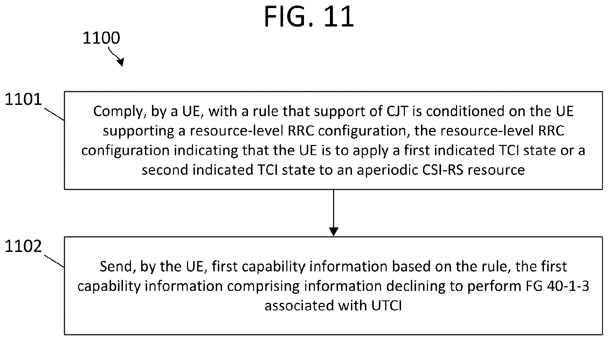

FIG. 11 is a flowchart depicting a method for configuring CJT in a UTCI framework based on the UE declining to perform a given feature, according to some embodiments of the present disclosure.

In some embodiments, to address the potential implicit bundling issue, a UE supporting a CJT scheme via FG 40-3-1-1 and/or 40-3-1-5 and more than one unified TCI state for CJT via FG 40-1-4 may decline the UE feature FG 40-1-3.

For example, and referring to FIG. 11, a UE supporting a CJT scheme via FG 40-3-1-1 and/or 40-3-1-5 and more than one unified TCI state for CJT via FG 40-1-4 may perform a method 1100 for configuring CJT in a UTCI framework to address the implicit bundling. The method 1100 may include one or more of the following operations.

The UE may comply with a rule that support of CJT is conditioned on the UE supporting a resource-level RRC configuration indicating that the UE is to apply a first indicated TCI state (e.g., a first indicated UTCI state) or a second indicated TCI state (e.g., a second indicated UTCI state) to an aperiodic CSI-RS resource (operation 1101). The UE may send first capability information based on the rule that the support of CJT is conditioned on the UE supporting the resource-level RRC configuration (operation 1102). The first capability information may include information declining to perform FG 40-1-3 (or a similar feature) associated with UTCI.

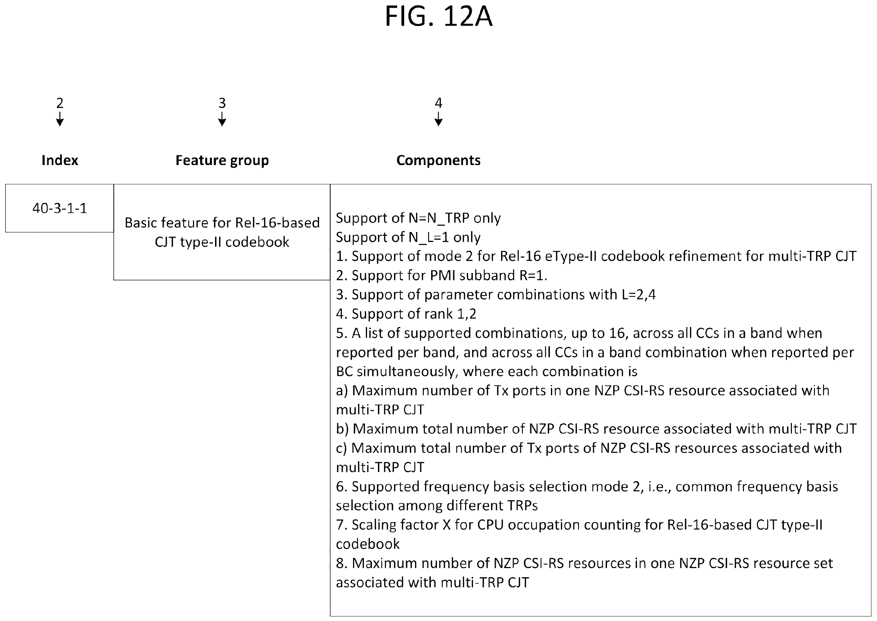

FIG. 12A is a diagram depicting table entries from the RAN1 UE features listing for index number 40-3-1-1.

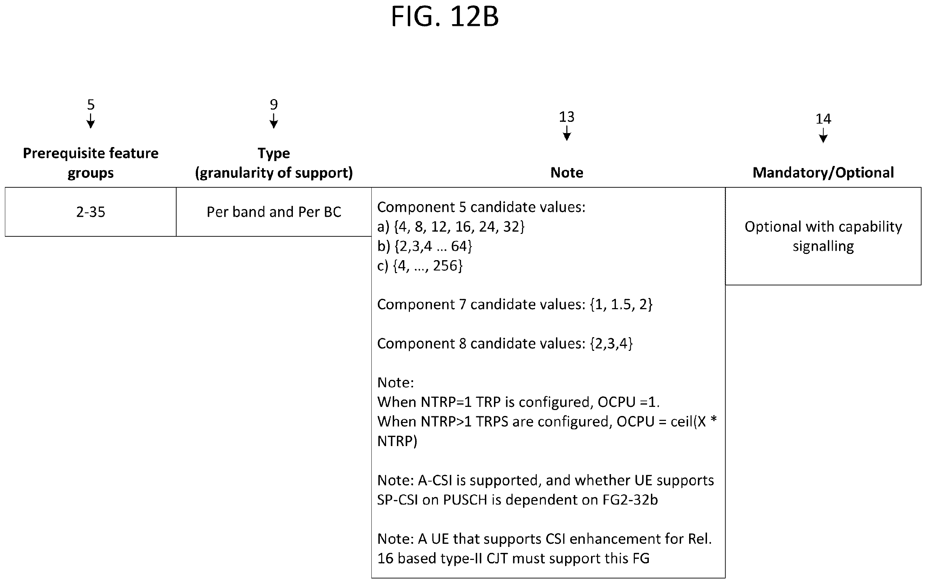

FIG. 12B is a diagram depicting additional table entries from the RAN1 UE features listing for index number 40-3-1-1.

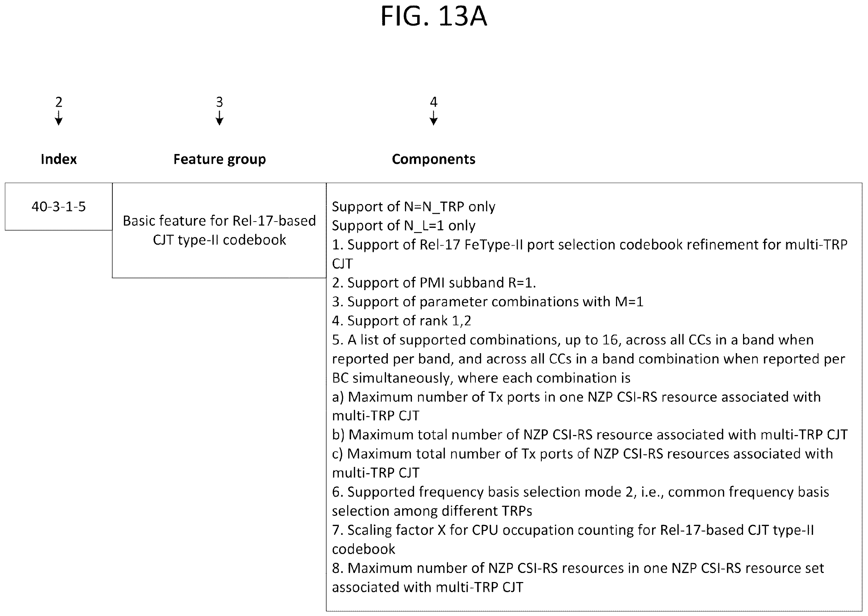

FIG. 13A is a diagram depicting table entries from the RAN1 UE features listing for index number 40-3-1-5.

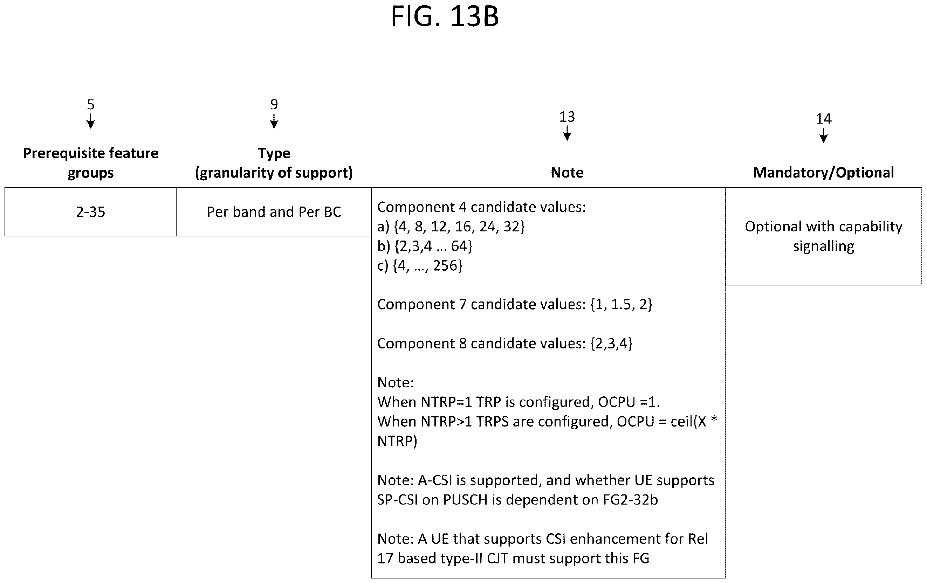

FIG. 13B is a diagram depicting additional table entries from the RAN1 UE features listing for index number 40-3-1-5.

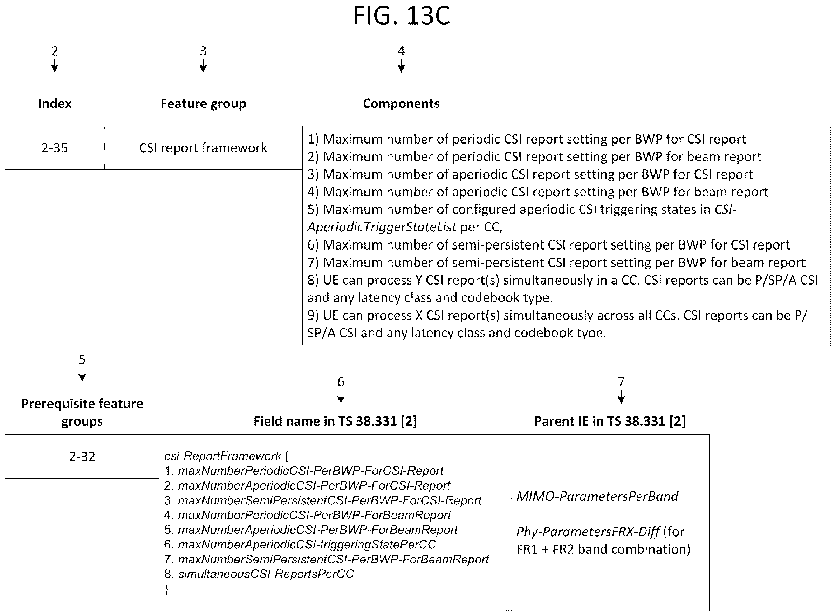

FIG. 13C is a diagram depicting table entries from the RAN1 UE features listing for index number 2-35, which is listed as a prerequisite feature group in table entries from the RAN1 UE features listings for index numbers 40-3-1-1 and 40-3-1-5.

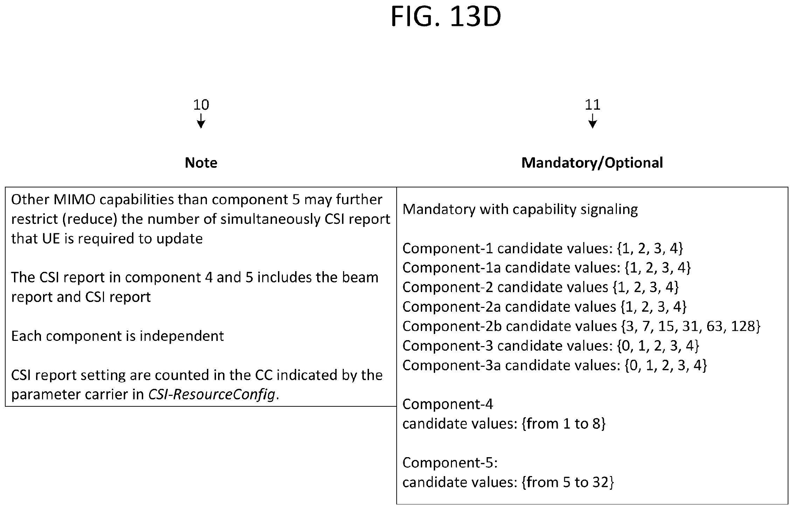

FIG. 13D is a diagram depicting additional table entries from the RAN1 UE features listing for index number 2-35.

In such cases, based on the UE declining to perform FG 40-1-3, a network node (e.g., a gNB) may only use a legacy TCI state framework for CSI-RS transmissions. This approach, however, may be under reporting (e.g., may be conservative reporting) from the UE, wherein the UE could have indicated "per resource set" for FG 40-1-3 (see FIG. 3) supporting the UTCI framework for CSI-RS transmissions in any other scheme than CJT (and/or NCJT).

For example, if the granularity of these UE features were per FS, it may be feasible for the UE to manage reporting, such that simultaneous support of both CJT schemes with more than one UTCI state and "per resource set" for TCI selection in one CC and/or band may be allowed. Because the granularity of FG 40-3-1-1 and FG 40-3-1-5 is per band and per BC (see column 9 in FIGS. 12B and 13B) and due to the fact that the granularity of FG 40-1-3 is per band (see column 9 of FIG. 3), the issue of under reporting of a UE's capabilities for some bands may still exists.

To address the issue of under reporting, in some embodiments, as similarly discussed above with respect to the NCJT proposals, a UE that supports CJT with more than one UTCI state and does not support joint operation of CJT schemes with more than one UTCI states and UTCI CSI-RS transmission may indicate "per resource set" for UE feature 40-1-3. In such embodiments, a network may not jointly configure a CJT scheme with more than one UTCI state or more than one UTCI framework for that UE. In some embodiments, the network may jointly configure a CJT scheme and a UTCI framework, while CSI-RS transmission configuration may be based on a legacy TCI state framework.

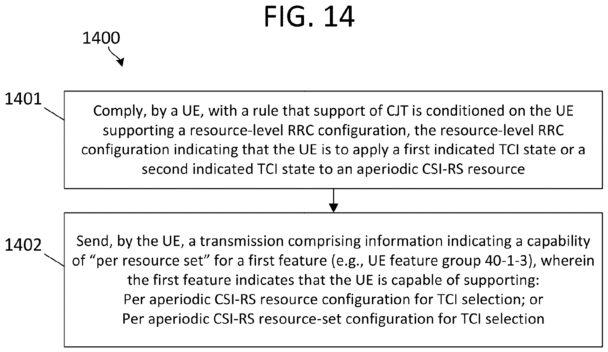

FIG. 14 is a flowchart depicting a method for configuring CJT in a UTCI framework based on the UE indicating "per resource set," according to some embodiments of the present disclosure.

Referring to FIG. 14, a UE that supports CJT scheme via FG 40-3-1-1 and/or 40-3-1-5 and more than one unified TCI state for CJT via FG 40-1-4 but does not support joint operation of CJT with more than one UTCI state and UTCI CSI-RS transmission, may perform a method 1400 for configuring CJT in a UTCI framework to address the implicit bundling. The method 1400 may include one or more of the following operations.

The UE may comply with a rule that support of CJT is conditioned on the UE supporting a resource-level RRC configuration, the resource-level RRC configuration indicating that the UE is to apply a first indicated TCI state (e.g., a first indicated UTCI state) or a second indicated TCI state (e.g., a second indicated UTCI state) to an aperiodic CSI-RS resource (operation 1401). The UE may send first capability information based on the rule that the support of CJT is conditioned on the UE supporting the resource-level RRC configuration (operation 1402). The first capability information may include information indicating a capability of "per resource set" for FG 40-1-3.

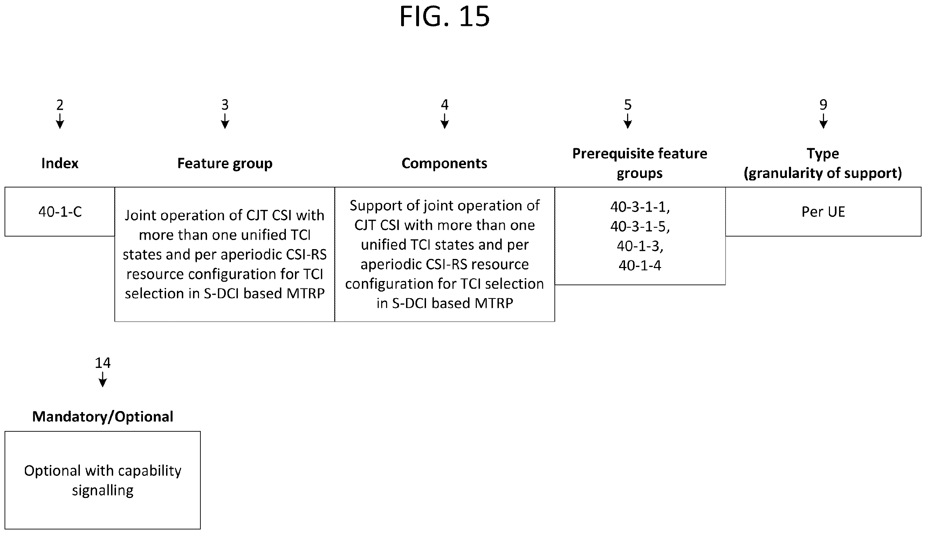

FIG. 15 is a diagram depicting possible table entries for a potential separate capability (e.g., having an index number of 40-1-C) depicted in a format associated with the RAN1 UE features listing, according to some embodiments of the present disclosure.

Referring to FIG. 15, in some embodiments, a separate capability may be introduced for joint operation of CJT and UTCI CSI-RS transmission. For example, when a UE indicates "per resource" for FG 40-1-3 (see FIG. 3) and more than one UTCI state for a CJT scheme for FG 40-1-4 (see FIG. 8), the separate capability may be introduced for a joint operation of a CJT scheme with more than one unified TCI state and more than one UTCI CSI-RS transmission. For example, column 4 of FIG. 15 indicates support of joint operation of CJT CSI with more than one unified TCI states and per aperiodic CSI-RS resource configuration for TCI selection in S-DCI based MTRP.

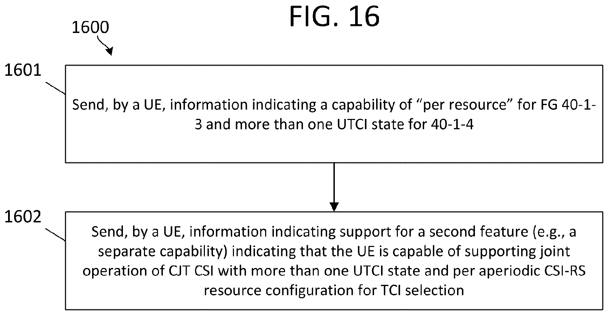

FIG. 16 is a flowchart depicting a method for configuring CJT in a UTCI framework based on the UE indicating a separate capability for joint operation of CJT with more than one UTCI state and UTCI, according to some embodiments of the present disclosure.

Referring to FIG. 16, in some embodiments, and as discussed above, a UE may perform a method 1600 for configuring CJT in a UTCI framework. The method may include one or more of the following operations.

In some embodiments, the UE may send information indicating a capability of per resource for FG 40-1-3 and more than one UTCI state for CJT for 40-1-4 (operation 1601). The UE may also send information indicating support of a separate capability (e.g., a second feature) (operation 1602). The separate capability may indicate that the UE is capable of supporting joint operation of CJT with more than one UTCI state and UTCI CSI-RS transmission. For example, the separate capability may indicate that the UE is capable of supporting joint operation of CJT with more than one UTCI state and per aperiodic UTCI CSI-RS resource configuration for TCI selection.

Method 500 (regarding NCJT) and method 1600 (regarding CJT) may be indicated by a note referring to both NCJT and CJT and stating that declaring a component value {per resource set} indicates no support of joint operation of NCJT or CJT when the UE also supports NCJT CSI under 23-7-1 or CJT under 40-1-4." For example, and as indicated in column 13 of FIG. 3, when a UE supports NCJT CSI under 23-7-1 or CJT CSI under 40-1-4, a system including the UE, may expect the UE to support "per resource" when the corresponding NCJT CSI or CJT CSI is configured.

FIG. 17 is a block diagram of an electronic device in a network environment, according to some embodiments of the present disclosure.

Referring to FIG. 17, an electronic device 1701 in a network environment 1700 may communicate with an electronic device 1702 via a first network 1798 (e.g., a short-range wireless communication network), or with an electronic device 1704 or a server 1708 via a second network 1799 (e.g., a long-range wireless communication network). The electronic device 1701 may communicate with the electronic device 1704 via the server 1708. The electronic device 1701 may include a processor 1720, a memory 1730, an input device 1750, a sound output device 1755, a display device 1760, an audio module 1770, a sensor module 1776, an interface 1777, a haptic module 1779, a camera module 1780, a power management module 1788, a battery 1789, a communication module 1790, a subscriber identification module (SIM) card 1796, and/or an antenna module 1797. In one embodiment, at least one of the components (e.g., the display device 1760 or the camera module 1780) may be omitted from the electronic device 1701, or one or more other components may be added to the electronic device 1701. Some of the components may be implemented as a single integrated circuit (IC). For example, the sensor module 1776 (e.g., a fingerprint sensor, an iris sensor, or an illuminance sensor) may be embedded in the display device 1760 (e.g., a display).

The processor 1720 may execute software (e.g., a program 1740) to control at least one other component (e.g., a hardware or a software component) of the electronic device 1701 coupled to the processor 1720, and may perform various data processing or computations.

As at least part of the data processing or computations, the processor 1720 may load a command or data received from another component (e.g., the sensor module 1776 or the communication module 1790) in volatile memory 1732, may process the command or the data stored in the volatile memory 1732, and may store resulting data in non-volatile memory 1734. The processor 1720 may include a main processor 1721 (e.g., a CPU or an application processor (AP)), and an auxiliary processor 1723 (e.g., a graphics processing unit (GPU), an image signal processor (ISP), a sensor hub processor, or a communication processor (CP)) that is operable independently from, or in conjunction with, the main processor 1721. Additionally or alternatively, the auxiliary processor 1723 may be adapted to consume less power than the main processor 1721, or to execute a particular function. The auxiliary processor 1723 may be implemented as being separate from, or a part of, the main processor 1721.

The auxiliary processor 1723 may control at least some of the functions or states related to at least one component (e.g., the display device 1760, the sensor module 1776, or the communication module 1790), as opposed to the main processor 1721 while the main processor 1721 is in an inactive (e.g., sleep) state, or together with the main processor 1721 while the main processor 1721 is in an active state (e.g., executing an application). The auxiliary processor 1723 (e.g., an image signal processor or a communication processor) may be implemented as part of another component (e.g., the camera module 1780 or the communication module 1790) functionally related to the auxiliary processor 1723.

The memory 1730 may store various data used by at least one component (e.g., the processor 1720 or the sensor module 1776) of the electronic device 1701. The various data may include, for example, software (e.g., the program 1740) and input data or output data for a command related thereto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input device 1750 may receive a command or data to be used by another component (e.g., the processor 1720) of the electronic device 1701, from the outside (e.g., a user) of the electronic device 1701. The input device 1750 may include, for example, a microphone, a mouse, or a keyboard.

The sound output device 1755 may output sound signals to the outside of the electronic device 1701. The sound output device 1755 may include, for example, a speaker or a receiver. The speaker may be used for general purposes, such as playing multimedia or recording, and the receiver may be used for receiving an incoming call. The receiver may be implemented as separate from, or as a part of, the speaker.

The display device 1760 may visually provide information to the outside (e.g., to a user) of the electronic device 1701. The display device 1760 may include, for example, a display, a hologram device, or a projector, and may include control circuitry to control a corresponding one of the display, hologram device, and projector. The display device 1760 may include touch circuitry adapted to detect a touch, or may include sensor circuitry (e.g., a pressure sensor) adapted to measure the intensity of force incurred by the touch.

The audio module 1770 may convert a sound into an electrical signal and vice versa. The audio module 1770 may obtain the sound via the input device 1750 or may output the sound via the sound output device 1755 or a headphone of an external electronic device 1702 directly (e.g., wired) or wirelessly coupled to the electronic device 1701.

The sensor module 1776 may detect an operational state (e.g., power or temperature) of the electronic device 1701, or an environmental state (e.g., a state of a user) external to the electronic device 1701. The sensor module 1776 may then generate an electrical signal or data value corresponding to the detected state. The sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 1777 may support one or more specified protocols to be used for the electronic device 1701 to be coupled to the external electronic device 1702 directly (e.g., wired) or wirelessly. The interface 1777 may include, for example, a high-definition multimedia interface (HDMI), a universal serial bus (USB) interface, a secure digital (SD) card interface, or an audio interface.

A connecting terminal 1778 may include a connector via which the electronic device 1701 may be physically connected to the external electronic device 1702. The connecting terminal 1778 may include, for example, an HDMI connector, a USB connector, an SD card connector, or an audio connector (e.g., a headphone connector).

The haptic module 1779 may convert an electrical signal into a mechanical stimulus (e.g., a vibration or a movement) or an electrical stimulus, which may be recognized by a user via tactile sensation or kinesthetic sensation. The haptic module 1779 may include, for example, a motor, a piezoelectric element, or an electrical stimulator.

The camera module 1780 may capture a still image or moving images. The camera module 1780 may include one or more lenses, image sensors, image signal processors, or flashes. The power management module 1788 may manage power that is supplied to the electronic device 1701. The power management module 1788 may be implemented as at least part of, for example, a power management integrated circuit (PMIC).

The battery 1789 may supply power to at least one component of the electronic device 1701. The battery 1789 may include, for example, a primary cell that is not rechargeable, a secondary cell that is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708), and may support performing communication via the established communication channel. The communication module 1790 may include one or more communication processors that are operable independently from the processor 1720 (e.g., the AP), and may support a direct (e.g., wired) communication or a wireless communication. The communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as BLUETOOTHTM, wireless-fidelity (Wi-Fi) direct, or a standard of the Infrared Data Association (IrDA)), or via the second network 1799 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The antenna module 1797 may transmit or receive a signal or power to or from the outside (e.g., the external electronic device) of the electronic device 1701. The antenna module 1797 may include one or more antennas. The communication module 1790 (e.g., the wireless communication module 1792) may select at least one of the one or more antennas appropriate for a communication scheme used in the communication network, such as the first network 1798 or the second network 1799. The signal or the power may then be transmitted or received between the communication module 1790 and the external electronic device via the selected at least one antenna.

Commands or data may be transmitted or received between the electronic device 1701 and the external electronic device 1704 via the server 1708 coupled to the second network 1799. Each of the electronic devices 1702 and 1704 may be a device of a same type as, or a different type, from the electronic device 1701. All or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1701. The electronic device 1701 may provide the outcome, with or without further processing of the outcome, as at least part of a reply to the request. To that end, cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations may be depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method comprising:
sending, by a user equipment, UE, a first transmission comprising information indicating a capability of per resource set for a first feature associated with a unified transmission-configuration-indicator, UTCI, scheme, the capability of per resource set indicating that the UE is capable of associating channel-state-information reference-signal, CSI-RS, resources with transmission-configuration-indicator, TCI, states at a resource-set level,
wherein the UE is configured to support a joint transmission; and
wherein the first feature indicates that the UE is capable of supporting:
per aperiodic CSI-RS resource configuration for TCI selection; or
per aperiodic CSI-RS resource-set configuration for TCI selection.

2. The method of claim 1, wherein the first feature is associated with an index number of 40-1-3 of a Radio Access Network 1, RAN1, UE features list.

3. The method of claim 1, wherein:
the joint transmission comprises a non-coherent joint transmission, NCJT; and
the UE supports NCJT CSI under a second feature, the second feature indicating that the UE is capable of supporting one or more features of channel-state-information multiple-transmission-and-reception point, CSI MTRP.

4. The method of claim 3, wherein the second feature is associated with an index number of 23-7-1 of a Radio Access Network 1, RAN1, UE features list.

5. The method of claim 1, wherein:
the joint transmission comprises a coherent joint transmission, CJT; and
the UE supports CJT CSI under a second feature, the second feature indicating that the UE is capable of supporting two transmission-configuration-indicator, TCI, states for a CJT transmission scheme for a physical downlink shared channel, PDSCH.

6. The method of claim 5, wherein the second feature is associated with an index number of 40-1-4 of a Radio Access Network 1, RAN1, UE features list.

7. The method of claim 1, further comprising sending, by the user equipment, UE, a second transmission comprising information declining to perform the first feature, wherein:
the joint transmission comprises a non-coherent joint transmission, NCJT; and
the UE supports NCJT CSI under a second feature, the second feature indicating that the UE is capable of supporting one or more features of channel-state-information multiple-transmission-and-reception point, CSI MTRP.

8. The method of claim 7, wherein:
the first feature is associated with an index number of 40-1-3 of a Radio Access Network 1, RAN1, UE features list; and
the second feature is associated with an index number of 23-7-1 of the RAN1 UE features list.

9. The method of claim 1, wherein the UE does not support joint operation of a joint transmission and a UTCI CSI-RS transmission.

10. A method comprising:
sending, by a user equipment, UE, first capability information based on a rule indicating how the UE applies a first indicated transmission configuration indicator, TCI, state or a second indicated TCI state to an aperiodic channel-state-information reference-signal, AP CSI-RS, resource; and
receiving, by the UE, a coherent joint transmission, CJT, based on the sending of the first capability information.

11. The method of claim 10, wherein:
the first indicated TCI state comprises a joint TCI state or a downlink, DL, TCI state; or
the second indicated TCI state comprises a joint TCI state or a DL TCI state.

12. The method of claim 10, wherein the rule indicates that support of the CJT is conditioned on the UE supporting a resource-level radio-resource-control, RRC, configuration,
wherein the resource-level RRC configuration indicates that the UE is to apply a first indicated transmission configuration indicator, TCI, state or a second indicated TCI state to an aperiodic channel-state-information reference-signal, AP CSI-RS, resource.

13. The method of claim 10, wherein the sending of the first capability information comprises sending information indicating support of unified TCI, UTCI, with a capability of:
per resource set; and
two or more unified TCI, UTCI, states in a CJT scheme,
wherein:
the first indicated TCI state comprises a first indicated UTCI state and the second indicated TCI state comprises a second indicated UTCI state; and
the rule indicates that, for CJT measurement or reporting:
the UE applies the first indicated UTCI state to a CSI-RS resource in a first group; and
the UE applies the second indicated UTCI state to a CSI-RS resource in a second group;
the CSI-RS resource in the first group corresponds to a first TRP or to a first TRP group associated with a first indicated UTCI state; and
the CSI-RS resource in the second group corresponds to a second TRP or to a second TRP group associated with the second indicated UTCI state.

14. The method of claim 10, wherein the sending of the first capability information comprises declining to perform a first feature associated with a unified transmission-configuration-indicator, UTCI, scheme,
wherein the UE supports:
a CJT scheme via a second feature and/or a third feature; and
more than one unified transmission-configuration-indicator, UTCI, state for CJT via a fourth feature,
wherein the first feature indicates that the UE is capable of supporting:
per aperiodic CSI-RS resource configuration for TCI selection; or
per aperiodic CSI-RS resource-set configuration for TCI selection,
wherein the second feature indicates that the UE is capable of supporting one or more features for a first CJT codebook,
wherein the third feature indicates that the UE is capable of supporting one or more features for a second CJT codebook, and
wherein the fourth feature indicates that the UE is capable of supporting two TCI states for the CJT scheme for a physical downlink shared channel, PDSCH.

15. The method of claim 14, wherein:
the first feature is associated with an index number of 40-1-3 of a Radio Access Network 1, RAN1, UE features list;
the second feature is associated with an index number of 40-3-1-1 of the RAN1 UE features list;
the third feature is associated with an index number of 40-3-1-5 of the RAN1 UE features list; and
the fourth feature is associated with an index number of 40-1-4 of the RAN1 UE features list.
